# EUROPEAN PATENT APPLICATION

(11) **EP 4 053 237 A1**
(43) Date of publication of application: **07.09.2022**
(21) Application number: 20880459.1
(22) Date of filing: 27.10.2020
(51) Int. Cl.: C09J 11/06, C09J 175/04, C09J 175/08

(54) **POLYURETHANE STRUCTURAL ADHESIVE**

(30) Priority: 28.10.2019 JP 2019194947
(71) Applicant: Mitsui Chemicals, Inc., Tokyo 105-7122 (JP)
(72) Inventor: YAMAMOTO, Naomi, Sodegaura-shi, Chiba 299-0265 (JP); CHIKAMOTO, Takuya, Sodegaura-shi, Chiba 299-0265 (JP); MORITA, Hirofumi, Sodegaura-shi, Chiba 299-0265 (JP)
(74) Representative: Hoffmann Eitle
(86) International application number: PCT/JP2020/040315
(87) International publication number: WO 2021/085435

(57) **Abstract**

A structural polyurethane adhesive includes a polyisocyanate component containing a urethane prepolymer having an isocyanate group at its terminal and a derivative of xylylene diisocyanate; and a polyol component containing a macropolyol having a number average molecular weight of 500 or more and 10000 or less, and an average number of hydroxyl groups of 1.9 or more and 4.0 or less.

## Description

The present invention relates to a structural polyurethane adhesive.

### BACKGROUND ART

Conventionally, a structural adhesive, which is used to adhere a plurality of members in a structure (such as an automobile or a building) formed from the members, has been known.

As such a structural adhesive, for example, a two-component urethane adhesive composition containing a main agent containing urethane prepolymer (A-1), which is obtained by a reaction of polyoxypropylene diol, polyoxypropylene triol, and 4,4'diisocyanatephenyl methane, and an isocyanurate product of pentamethylene diisocyanate (CI-2); and a curing agent containing a trifunctional polypropylene polyol (B1-1) and fine particles (D-5) made of a styrene homopolymer has been proposed (for example, Patent document 1 (Example 1) below).

### Citation List

### Patent Document

Patent Document 1: International Patent Publication No. WO2016/080508

### SUMMARY OF THE INVENTION

### PROBLEM TO BE SOLVED BY THE INVENTION

However, there is a disadvantage that the above-described two-component urethane adhesive composition does not have sufficient adhesive strength.

The present invention provides a structural polyurethane adhesive with excellent adhesive strength.

### MEANS FOR SOLVING THE PROBLEM

The present invention [1] includes a structural polyurethane adhesive including: a polyisocyanate component containing a urethane prepolymer having an isocyanate group at its terminal and a derivative of xylylene diisocyanate; and a polyol component containing a macropolyol having a number average molecular weight of 500 or more and 10000 or less, and an average number of hydroxyl groups of 1.9 or more and 4.0 or less.

The present invention [2] includes the structural polyurethane adhesive described in [1], wherein the polyisocyanate component contains a compatibilizing agent for compatibilize the urethane prepolymer with the derivative of xylylene diisocyanate, and the compatibilizing agent has a solubility parameter of 7.5 (cal/cm³)^{1/2} or more and 13.0 (cal/cm³)^{1/2} or less calculated by Fedors formula.

The present invention [3] includes the structural polyurethane adhesive described in [2] above, wherein the compatibilizing agent is at least one plasticizer selected from the group consisting of phthalic acid ester, adipic acid ester, benzoic acid ester, and hydrogenated phthalic acid ester.

The present invention [4] includes the structural polyurethane adhesive described in any one of the above-described [1] to [3], wherein the derivative of xylylene diisocyanate includes an isocyanurate derivative of xylylene diisocyanate.

The present invention [5] includes the structural polyurethane adhesive described in any one of the above-described [1] to [4], wherein a content of the derivative of xylylene diisocyanate with respect to 100 parts by mass of a total amount of the urethane prepolymer is 1.5 parts by mass or more and 30 parts by mass or less.

The present invention [6] includes the structural polyurethane adhesive described in any one of the above-described [1] to [5], wherein the macropolyol includes a polyether polyol in the polyol component.

The present invention [6] includes the structural polyurethane adhesive described in any one of the above-described [1] to [6], wherein the urethane prepolymer is a reaction product of a material polyisocyanate containing a diphenylmethane diisocyanate and a material polyol containing a macropolyol.

The present invention [8] includes the structural polyurethane adhesive described in any one of the above-described [1] to [7], being a two-component curable adhesive including a main agent consisting of the polyisocyanate component and a curing agent consisting of the polyol component.

The present invention [9] includes the structural polyurethane adhesive described in any one of the above-described [1] to [8], being a solventless-type adhesive.

### EFFECTS OF THE INVENTION

In the structural polyurethane adhesive of the present invention, the polyisocyanate component contains a urethane prepolymer having an isocyanate group at its molecule terminal and a derivative of xylylene diisocyanate, and the polyol component contains a macropolyol having a number average molecular weight within a predetermined range and an average number of hydroxyl groups within a predetermined range. Thus, excellent adhesive strength is achieved.

### DESCRIPTION OF THE EMBODIMENTS

The structural polyurethane adhesive of the present invention is a structural adhesive defined by JIS K 6800 (1985), and is specifically a "reliable adhesive that can bear heavy loads for a long period of time".

More specifically, the structural polyurethane adhesive contains, as essential components, a polyisocyanate component containing a liberated (free) isocyanate group, and a polyol component containing a liberated (free) hydroxyl group.

The structural polyurethane adhesive may be a one-component curable adhesive in which a polyisocyanate component and a polyol component are mixed in advance, or a two-component curable adhesive that includes a main agent (A solution) made of a polyisocyanate component, and a curing agent (B solution) made of a polyol component, and the individually prepared main agent and curing agent are mixed when being used.

In terms of workability and handleability, preferably, the structural polyurethane adhesive is a two-component curable adhesive.

The polyisocyanate component contains a urethane prepolymer having an isocyanate group at its molecule terminal (hereinafter, referred to as an isocyanate group-terminated urethane prepolymer), and a derivative of xylylene diisocyanate.

The isocyanate group-terminated urethane prepolymer is a urethane prepolymer having at least two isocyanate groups at its molecule terminal, and is a reaction product obtained by a reaction of a material polyisocyanate and a material polyol so that the isocyanate group exceeds the hydroxyl group.

Examples of the material polyisocyanate include polyisocyanate monomers and polyisocyanate derivatives.

Examples of the polyisocyanate monomers include aromatic polyisocyanates, araliphatic polyisocyanates, and aliphatic polyisocyanates.

Examples of the aromatic polyisocyanates include aromatic diisocyanates such as tolylene diisocyanate (2,4- or 2,6-tolylene diisocyanate or a mixture thereof) (TDI), phenylene diisocyanate (m-, p-phenylene diisocyanate or a mixture thereof), 4,4'-diphenyl diisocyanate, 1,5-naphthalene diisocyanate (NDI), diphenyl methane diisocyanate (4,4'-,2,4'- or 2,2'-diphenyl methane diisocyanate or a mixture thereof) (MDI), 4,4'-toluidine diisocyanate (TODI), and 4,4'-diphenyl ether diisocyanate.

Examples of the araliphatic polyisocyanates include araliphatic diisocyanates such as xylylene diisocyanate (1,3- or 1,4-xylylene diisocyanate or a mixture thereof) (XDI), tetramethyl xylylene diisocyanate (1,3- or 1,4-tetramethyl xylylene diisocyanate or a mixture thereof) (TMXDI), and ω,ω'-diisocyanate -1,4-diethyl benzene.

Examples of the aliphatic polyisocyanates include aliphatic diisocyanates such as trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), 1,5-pentamethylene diisocyanate (PDI), 1,6-hexamethylene diisocyanate (HDI), 2,4,4- or 2,2,4-trimethyl hexamethylene diisocyanate, and 2,6-diisocyanate methyl caproate.

The aliphatic polyisocyanates include alicyclic polyisocyanates. Examples of the alicyclic polyisocyanates include alicyclic diisocyanates such as 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethyl cyclohexyl isocyanate (isophorone diisocyanate) (IPDI), methylene bis (cyclohexyl isocyanate) (4,4'-, 2,4'- or 2,2'-methylene bis (cyclohexyl isocyanate, Trans,Trans-isomer, Trans,Cis-isomer, or Cis,Cis-isomer of these, or a mixture thereof)) (H₁₂MDI), methyl cyclohexane diisocyanate (methyl-2,4-cyclohexane diisocyanate, methyl-2,6-cyclohexane diisocyanate), norbornane diisocyanate (various isomers or a mixture thereof) (NBDI), and bis (isocyanatomethyl) cyclohexane (1,3- or 1,4-bis (isocyanatomethyl) cyclohexane, or a mixture thereof) (H₆XDI).

These polyisocyanate monomers can be used singly or in combination of two or more.

Examples of the polyisocyanate derivatives include multimers (for example, dimers, trimers (for example, isocyanurate derivative, iminooxadiazine dione derivative), pentamers, heptamers, etc.), allophanate derivatives (for example, allophanate derivative produced by reaction of the above-described polyisocyanate monomer with a known monohydric alcohol (described below) and/or a known dihydric alcohol (described below)), polyol derivatives (for example, polyol derivative produced by reaction of the polyisocyanate monomer with a known trihydric or more alcohol (described below) (alcohol adduct)), etc.), biuret derivatives (for example, biuret derivative produced by reaction of the above-described polyisocyanate monomer with water or amines, etc.), urea derivatives (for example, urea derivative produced by reaction of the above-described polyisocyanate monomer with diamine, etc.), oxadiazinetrione derivatives (for example, oxadiazinetrione produced by reaction of the above-described polyisocyanate monomer with carbon dioxide, etc.), carbodiimide derivatives (carbodiimide derivative produced by decarboxylation condensation reaction of the above-described polyisocyanate monomer, etc.), uretdione derivatives, and uretonimine derivatives of the above-described polyisocyanate monomer.

Furthermore, for the polyisocyanate derivative, polymethylene polyphenyl polyisocyanate (crude MDI, polymeric MDI, or polynuclear diphenylmethane diisocyanate) is used. ) is also used.

These polyisocyanate derivatives can be used singly or in combination of two or more.

These material polyisocyanates can be used singly or in combination of two or more.

In terms of adhesive strength, as the material polyisocyanate, preferably, a polyisocyanate monomer is used. More preferably, an aromatic polyisocyanate is used. Even more preferably, a diphenylmethane diisocyanate is used. Particularly preferably, a 4,4'-diphenylmethane diisocyanate is used.

As the material polyol, for example, a macropolyol is used. The macropolyol is a compound having two or more hydroxyl groups, and a number average molecular weight of 300 or more, preferably 400 or more, and, for example, 10000 or less.

In the material polyol, the macropolyol is not especially limited. For example, as the polyol component (curing agent), the macropolyol described below is used. These macropolyols can be used singly or in combination of two or more.

As the macropolyol as the material polyol, preferably, polyether polyol (described below), polyester polyol (described below), and polycarbonate polyol (described below) are used. More preferably, polyether polyol (described below) is used. Even more preferably, polyoxy (C2 to 3) alkylene polyol is used.

The macropolyol as the material polyol has a number average molecular weight (molecular weight calibrated with standard polystyrene measured with gel permeation chromatograph (GPC)) of, for example, 300 or more, preferably 400 or more, more preferably 500 or more, and, for example, 10000 or less, preferably 8000 or less, more preferably 5000 or less.

The material polyol has a hydroxyl equivalent of, for example, 150 or more, preferably 200 or more, and, for example, 10000 or less, preferably 8000 or less.

The hydroxyl equivalent can be calculated by obtaining a hydroxyl value by an acetylation method, a phthalated method, etc. in conformity with the A method or the B method of JIS K 1557-1 (2007) (hereinafter, the same applies).

The macropolyol as the material polyol has an average number of hydroxyl groups of, for example, 1.8 or more, preferably 2 or more, and, for example, 6 or less, preferably 4 or less, more preferably 3 or less.

The average number of hydroxyl groups is obtained by the calculation of the hydroxyl value, the hydroxyl equivalent, and the molecular weight.

The average number of hydroxyl groups can also be calculated from the preparation ratios of the material components. In such a case, the number average molecular weight can be calculated from the hydroxyl equivalent and the average number of hydroxyl groups (hereinafter, the same applies).

As the material polyol, particularly preferably, a macropolyol having an average number of hydroxyl groups of 2, and a macropolyol having an average number of hydroxyl groups of 3 are used in combination.

When a macropolyol having an average number of hydroxyl groups of 2 and a macropolyol having an average number of hydroxyl groups of 3 are used in combination, with respect to 100 parts by mass of the total amount thereof, the macropolyol having an average number of hydroxyl groups of 2 is, for example, more than 50 parts by mass, preferably 60 parts by mass or more, and, for example, 90 parts by mass or less, preferably 80 parts by mass or less. With respect to 100 parts by mass of the total amount thereof, the macropolyol having an average number of hydroxyl groups of 3 is, for example, 10 parts by mass or more, preferably 20 parts by mass or more, and, for example, less than 50 parts by mass, preferably 40 parts by mass or less.

The material polyol can contain a low molecular-weight polyol as necessary.

The low molecular-weight polyol is a compound having 2 or more hydroxyl groups and an average molecular weight of less than 300, preferably less than 400, and examples thereof include dihydric alcohols such as ethylene glycol, propylene glycol, 1,3-propanediol, 1,4-butylene glycol, 1,3-butylene glycol, 1,2-butylene glycol, 1,5-pentanediol, 1,6-hexanediol, neopentyl glycol, 3-methyl-1,5-pentanediol, 2,2,2-trimethylpentanediol, 3,3-dimethylol heptane, alkane (C7 to 20) diol, 1,3- or 1,4-cyclohexanedimethanol and a mixture thereof, 1,3- or 1,4-cyclohexanediol and a mixture thereof, hydrogenated bisphenol A, 1,4-dihydroxy-2-butene, 2,6-dimethyl-1-octene-3,8-diol, bisphenol A, diethylene glycol, triethylene glycol, and dipropylene glycol; trihydric alcohols such as glycerine, trimethylolpropane, and triisopropanol amine; tetrahydric alcohols such as tetramethylol methane (pentaerythritol), and diglycerol; pentahydric alcohols such as xylitol; hexahydric alcohols such as sorbitol, mannitol, allitol, iditol, dulcitol, altritol, inositol, and dipentaerythritol; heptahydric alcohols such as perseitol; and octahydric alcohol such as sucrose.

These low molecular-weight polyol can be used singly or in combination of two or more.

The content ratio of the low molecular-weight polyol to the material polyol is appropriately selected in a range in which the excellent effects of the present invention are not reduced.

More specifically, the content ratio of the low molecular-weight polyol to 100 parts by mass of the total amount of the material polyol is, for example, 30 parts by mass or less, preferably 20 parts by mass or less, more preferably 10 parts by mass or less, particularly preferably 0 part by mass.

In other words, in terms of adhesive strength, preferably, the material polyol does not contain a low molecular-weight polyol, and consists of a macropolyol.

The isocyanate group-terminated urethane prepolymer can be obtained by subjecting the material polyisocyanate and the material polyol to a urethane-forming reaction in a ratio in which the equivalent ratio (NCO/OH) of the isocyanate group of the material polyisocyanate to the hydroxyl group of the material polyol is more than 1, preferably 1.3 to 50, more preferably 1.5 to 3.

The urethane-forming reaction can conform to a known method. The reaction temperature in the urethane-forming reaction is, for example, 50°C or more, and, for example, 120°C or less, preferably 100°C or less. The reaction time is, for example, 0.5 hours or more, preferably 1 hour or more, and, for example, 24 hours or less, preferably 15 hours or less.

The urethane-forming reaction can be a reaction in the absence of a solvent or can be a reaction in the present of an organic solvent (solution polymerization).

Examples of the organic solvent include ketones such as acetone, methyl ethyl ketone, methyl isobutyl ketone, and cyclohexanone; nitriles such as acetonitrile; alkyl esters such as methyl acetate, ethyl acetate, butyl acetate, and isobutyl acetate; aliphatic hydrocarbons such as n-hexane, n-heptane, and octane; alicyclic hydrocarbons such as cyclohexane and methyl cyclohexane; aromatic hydrocarbons such as toluene, xylene, and ethyl benzenes; glycol ether esters such as methyl cellosolve acetate, ethyl cellosolve acetate, methyl carbitol acetate, ethyl carbitol acetate, ethylene glycol ethyl ether acetate, propylene glycol monomethylether acetate, 3-methyl-3- methoxybutyl acetate, and ethyl-3-ethoxy propionate; ethers such as diethyl ether, tetrahydrofuran, and dioxane; halogenated aliphatic hydrocarbons such as methyl chloride, methylene chloride, chloroform, carbon tetrachloride, methyl bromide, methylene iodide, and dichloro ethane; polar aprotic solvents such as N-methylpyrrolidone, dimethylformamide, N,N'-dimethylacetamide, dimethyl sulfoxide, and hexamethyl phosphonyl amide; and known non-flammable solvents.

These organic solvent can be used singly or in combination of two or more.

In the solution polymerization, the mixing ratio of the organic solvent is appropriately set depending on the purpose and use.

In the above-described urethane-forming reaction, as necessary, known urethane-forming catalysts such as amines and organometallic compounds can be added in an appropriate ratio.

Examples of the amines include tertiary amines such as triethyl amine, triethylenediamine, bis-(2-dimethyl amino ethyl) ether, and N- methylmorpholine, quaternary ammonium salt such as tetra ethyl hydroxyl ammonium, and imidazoles such as imidazole and 2-ethyl-4-methyl imidazole.

Examples of the organometallic compound include organic tin compounds such as tin acetate, tin octylate, tin oleate, and tin laurate, dibutyltin diacetate, dimetyltin dilaurate, dibutyltin dilaurate, dibutyltin dimercaptide, dibutyltin malate, dibutyltin dilaurate, dibutyltin dineodecanoate, dioctyltin dimercaptide, dioctyltin dilaurate, and dioctyltin dichloride; organic lead compounds such as lead octoate and lead naphthenate; organic nickel compounds such as nickel naphthenate; organic cobalt compounds such as cobalt naphthenate; organic copper compounds such as octenoic acid copper; and organic bismuth compounds such as bismuth octylate and bismuth neodecanoate.

Examples the urethane-forming catalyst include potassium salts such as potassium carbonate, potassium acetate, and potassium octylate.

These urethane-forming catalysts can be used singly or in combination of two or more.

As the urethane-forming catalyst, preferably, an organometallic compound is used.

When the isocyanate group-terminated urethane prepolymer is prepared in the presence of organic solvents, the organic solvents can be removed as necessary by a known removal method.

As necessary, the free (unreacted) material polyisocyanate can be removed from the prepared isocyanate group-terminated urethane polymer by a known removal method such as distillation or extraction.

The average number of the isocyanate groups in the isocyanate group-terminated urethane prepolymer (solid content) is, for example, 1.2 or more, preferably 1.5 or more, more preferably 2 or more, and, for example, 4 or less, preferably 3 or less.

The equivalent of the isocyanate group in the isocyanate group-terminated urethane prepolymer (solid content) is, for example, 84 or more, preferably 150 or more, more preferably 168 or more, and, for example, 3500 or less, preferably 2800 or less, more preferably 2335 or less. The equivalent of the isocyanate group is the same as the amine equivalent, and can be obtained by the A method or B method of JIS K 1603-1 (2007).

The content of the isocyanate group in the isocyanate group-terminated urethane prepolymer (solid content) (the isocyanate group content, NCO%) is, for example, 1.2% by mass or more, preferably 1.5% by mass or more, more preferably 1.8% by mass or more, even more preferably 2.0% by mass or more, particularly preferably 3.0% by mass or more, and, for example, 50% by mass or less, preferably 28% by mass or less, more preferably 25% by mass or less, even more preferably 10% by mass or less, particularly preferably 6% by mass or less.

These isocyanate group-terminated urethane prepolymers can be used singly or in combination of two or more.

As the isocyanate group-terminated urethane prepolymer, preferably, an isocyanate group-terminated urethane prepolymer that is a reaction product of an aromatic polyisocyanate and a polyether polyol is used. More preferably, an isocyanate group-terminated urethane prepolymer that is a reaction product of a diphenylmethane diisocyanate and a polyether polyol is used.

In the polyisocyanate component, the derivative of xylylene diisocyanate is obtained by modifying (derivatizing) a xylylene diisocyanate monomer (monomer) in a known method.

Examples of the xylylene diisocyanate (XDI) include its structural isomers such as 1,2-xylylene diisocyanate (o-XDI), 1,3-xylylene diisocyanate (m-XDI), and 1,4-xylylene diisocyanate (p-XDI).

These xylylene diisocyanates can be used singly or in combination of two or more. As the xylylene diisocyanate, preferably, 1,3-xylylene diisocyanate, and 1,4-xylylene diisocyanate are used. More preferably, 1,3-xylylene diisocyanate is used.

More specific examples of the derivative of xylylene diisocyanate include multimers (for example, dimers, trimers (for example, isocyanurate derivative, iminooxadiazine dione derivative), pentamers, heptamers, etc.), allophanate derivatives (for example, allophanate derivative produced by reaction of the xylylene diisocyanate with a known monohydric alcohol and/or a known dihydric alcohol), polyol derivatives (for example, polyol derivative produced by reaction of the xylylene diisocyanate with a known trihydric or more alcohol (alcohol adduct)), etc.), biuret derivatives (for example, biuret derivative produced by reaction of the xylylene diisocyanate with water or amines, etc.), urea derivatives (for example, urea derivative produced by the xylylene diisocyanate with diamine, etc.), oxadiazinetrione derivatives (for example, oxadiazinetrione produced by reaction of the xylylene diisocyanate with carbon dioxide, etc.), carbodiimide derivatives (carbodiimide derivative produced by decarboxylation condensation reaction of the xylylene diisocyanate, etc.), uretdione derivatives, and uretonimine derivatives of the xylylene diisocyanate.

These derivatives of xylylene diisocyanate can be used singly or in combination of two or more.

In terms of adhesive strength, as the derivative of xylylene diisocyanate, preferably, an isocyanurate derivative of xylylene diisocyanate, an allophanate derivative of xylylene diisocyanate, a biuret derivative of xylylene diisocyanate, and a polyol derivative of xylylene diisocyanate (alcohol adduct) are used.

More specifically, the isocyanurate derivative of xylylene diisocyanate can be obtained by an isocyanurate-forming reaction of xylylene diisocyanate in the presence of a known isocyanurate-forming catalyst. The reaction conditions for the isocyanurate-forming reaction are not especially limited and can conform to a known mehotd.

The isocyanurate derivative of xylylene diisocyanate can be modified (alcohol-modified) with a known monohydric alcohol and/or a known dihydric alcohol.

Examples of the monohydric alcohol include C2-6 (carbon number, hereinafter, the same) straight-chain monohydric alcohols such as ethanol, n-propanol, n-butanol, n-pentanol, and n-hexanol, and C3-6 branched monohydric alcohols such as isopropanol, isobutanol (isobutyl alcohol), sec-butanol, tert-butanol, isopentanol, and isohexanol. These monohydric alcohols can be used singly or in combination of two or more.

Examples of the dihydric alcohol include C2-6 straight-chain dihydric alcohols such as ethylene glycol, 1,3-propanediol, 1,4-butanediol, 1,5-pentanediol, and 1,6-hexanediol, and C3-6 branched dihydric alcohols such as 1,2-propanediol, 1,3-butanediol, 1,2-butanediol, neopentyl glycol, and 3-methyl-1,5-pentanediol. These dihydric alcohold can be used singly or in combination of two or more.

The modification method with a monohydric alcohol and/or a dihydric alcohol is not expecially limited. For example, alcohol-modified isocyanurate derivative of xylylene diisocyanate can be obtained by subjecting xylylene diisocyanate and alcohols to a urethane-forming reaction, and then to an isocyanurate-forming reaction in the presence of an isocyanurate-forming catalyst.

In the alcohol modification of the derivative of xylylene diisocyanate, the reaction conditions and formulation (alcohol modification amount) are appropriately set depending on the purpose and use.

The allophanate derivative of xylylene diisocyanate can be obtained, for example, by subjecting xylylene diisocyanate and the above-described monohydric alcohol and/or dihydric alcohol to a urethane-forming reaction, and then further to an allophanate-forming reaction in the presence of a known allophanate catalyst.

The reaction conditions of the allophanate-forming reaction of xylylene diisocyanate are not expecially limited, and can conform to a known method.

The polyol derivative of xylylene diisocyanate (alcohol adduct) can be obtained, for example, by a reaction of xylylene diisocyanate and a known trihydric or more alcohol in a ratio in which the isocyanate group exceeds the hydroxyl group.

Examples of the trihydric or more alcohol include trihydric alcohols such as glycerin, trimethylolpropane, and triisopropanolamine. These trihydric or more alcohols can be used singly or in combination of two or more. As the trihydric or more alcohol, preferably, a trihydric alcohol is used. More preferably, a trimethylolpropane is used.

The conditions for the reaction of the xylylene diisocyanate and trihydric or more alcohol are not expecially limited, and can conform to a known method.

The biuret derivative of xylylene diisocyanate can be obtained by, for example, allowing xylylene diisocyanate to react with water, a tertiary alcohol (such as t-butyl alcohol), and a secondary amine (such as dimethyl amine or diethyl amine) and then further subjecting them to a biuret-forming reaction in the presence of a known biuret catalyst.

The reaction conditions for the biuret-forming reaction of xylylene diisocyanate are not expecially limited, and can conform to a known method.

In terms of adhesive strength, as the derivatives of xylylene diisocyanate, even more preferably, an isocyanurate derivative of xylylene diisocyanate, an allophanate derivative of xylylene diisocyanate, and a biuret derivative of xylylene diisocyanate are used. Particularly preferably, an isocyanurate derivative of xylylene diisocyanate is used.

In other words, preferably, the derivative of xylylene diisocyanate includes an isocyanurate derivative of xylylene diisocyanate.

When the isocyanurate derivative of xylylene diisocyanate is alcohol modified, an allophanate derivative of xylylene diisocyanate may be obtained as a by-product. In other words, when the isocyanurate derivative of xylylene diisocyanate is alcohol modified, the derivative of xylylene diisocyanate can contain an allophanate derivative of xylylene diisocyanate as a by-product together with an isocyanurate derivative of xylylene diisocyanate in an appropriate ratio.

In such a case, as the ratios (molar ratios) of the isocyanurate group and allophanate group in the derivative of xylylene diisocyanate (total amount), the isocyanurate group with respect to the total molar amount of the isocyanurate group and allophanate group is, for example, 10mol% or more, preferably 30 mol% or more, more preferably 50 mol% or more, even more preferably more than 50 mol%, even more preferably 70 mol% or more, even more preferably 90 mol% or more, and usually less than 100mol%. The allophanate group with respect to the total molar amount of the isocyanurate group and allophanate group is, for example, more than 0 mol%, for example, 90 mol% or less, preferably 70 mol% or less, more preferably 50 mol% or less, even more preferably less than 50 mol%, even more preferably 30mol% or less, even more preferably 10 mol% or less.

The ratio (molar ratio) of the isocyanurate group and allophanate group can be obtained, for example, from the ratio of the peak height derived from the isocyanurate group to the peak height derived from the allophanate group measured with 1H-NMR by a known method.

Alternatively, the derivative of xylylene diisocyanate can be prepared, for example, by individually preparing an isocyanurate derivative of xylylene diisocyanate and an allophanate derivative of xylylene diisocyanate and mixing them.

In such a case, the mixing ratio of the isocyanurate derivative of xylylene diisocyanate to the total amount of the derivatives of xylylene diisocyanate is, for example, 10% by mass or more, preferably 30% by mass or more, more preferably 50% by mass or more, even more preferably more than 50% by mass, even more preferably 70% by mass or more, even more preferably 90% by mass or more.

The mixing ratio of the allophanate derivative of xylylene diisocyanate to the total amount of the derivatives of xylylene diisocyanate is, for example, more than 0% by mass, for example, 90% by mass or less, preferably 70% by mass or less, more preferably 50% by mass or less, even more preferably less than 50% by mass, even more preferably 30% by mass or less, even more preferably 10% by mass or less.

The derivatives of xylylene diisocyanate may be prepared in the absence of a solvent or in the presence of organic solvents.

When the derivative of xylylene diisocyanate is prepared in the presence of organic solvents, the organic solvents can be removed by a known removal method as necessary.

As necessary, the free (unreacted) xylylene diisocyanate (monomer) can be removed from the prepared derivative of xylylene diisocyanate by a known removal method such as distillation or extraction.

The average number of the isocyanate groups in the derivative of xylylene diisocyanate (solid content) is, for example, 1.2 or more, preferably 1.5 or more, more preferably 2 or more, and, for example, 4 or less, preferably 3 or less.

The equivalent of the isocyanate group in the derivative of xylylene diisocyanate (solid content) is, for example, 84 or more, preferably 150 or more, even more preferably 168 or more, and, for example, 1000 or less, preferably 800 or less, even more preferably 500 or less. The equivalent of the isocyanate group is the same as the amine equivalent, and can be obtained by the A method or B method of JIS K 1603-1 (2007).

The content of the isocyanate group in the derivative of xylylene diisocyanate (solid content) (the isocyanate group content, NCO%) is, for example, 15% by mass or more, preferably 16% by mass or more, and, for example, 50% by mass or less, preferably 22% by mass or less, more preferably 21% by mass or less.

In the polyisocyanate component, the content ratio of the isocyanate group-terminated urethane prepolymer to the derivative of xylylene diisocyanate is appropriately set depending on their isocyanate group equivalents and isocyanate group contents.

More specifically, in terms of adhesive strength, with respect to the total mass of the isocyanate group-terminated urethane prepolymer and derivative of xylylene diisocyanate, the isocyanate group-terminated urethane prepolymer is, for example, 70% by mass or more, preferably 80% by mass or more, more preferably 90% by mass or more, and, for example, 99% by mass or less, preferably 98% by mass or less, more preferably 97% by mass or less. With respect to the total mass of the isocyanate group-terminated urethane prepolymer and derivative of xylylene diisocyanate, the derivative of xylylene diisocyanate is, for example, 1% by mass or more, preferably 2% by mass or more, more preferably 3% by mass or more, and, for example, 30% by mass or less, preferably 20% by mass or less, more preferably 10% by mass or less.

In terms of adhesive strength, with respect to 100 parts by mass of the total amount of the isocyanate group-terminated urethane prepolymer, the derivative of xylylene diisocyanate is, for example, 1.0 parts by mass or more, preferably 1.5 parts by mass or more, more preferably 3.0 parts by mass or more, and, for example, 40 parts by mass or less, preferably 30 parts by mass or less, more preferably 20 parts by mass or less.

The polyisocyanate component can contain a compatibilizing agent as an optional component.

Preferably, the polyisocyanate component contains a compatibilizing agent.

The compatibilizing agent is an additive to suppress the phase separation of the isocyanate group-terminated urethane prepolymer and the derivative of xylylene diisocyanate and compatibilize them.

In the present invention, the compatibilizing agent is defined as a compound having a solubility parameter (SP value) calculated from Fedors formula of 7.5 (cal/cm³)^{1/2} or more and 13.0 (cal/cm³)^{1/2} or less.

The Fedors formula is a calculating formula to obtain an SP value from cohesive energy density and mol volume (molecular volume) and is described in 'A method for Estimating Both the Solubility Parameters and Molar Volumes of Liquids', R. F. Fedors: POLYMER ENGINEERING AND SCIENCE, Feb 1974, Vol. 14, No. 2, pages 147-152.

In other words, the SP value calculated from the Fedors formula is a calculated value determined by the molecular structure of the compound.

In the present invention, a compound having an SP value of 7.5 (cal/cm³)^{1/2} or more and 13.0 (cal/cm³)^{1/2} or less calculated from the Fedors formula can be used as the compatibilizing agent.

More specifically, as the compatibilizing agent, a plasticizer is used. Examples of the plasticizer include carboxylic acid ester plasticizers such as phthalic acid ester, adipic acid ester, benzoic acid ester, and hydrogenerated phthalic acid ester.

Examples of the phthalic acid ester include dimethyl phthalate (DMP, SP value of 11.54 (cal/cm³)^{1/2}), diethyl phthalate (DEP, SP value of 11.07 (cal/cm³)^{1/2}), dibutyl phthalate (SP value of 10.47 (cal/cm³)^{1/2}), diheptyl phthalate (SP value of 9.96 (cal/cm³)^{1/2}), di-n-octyl phthalate (SP value of 9.85 (cal/cm³)^{1/2}), diisooctyl phthalate (SP value of 9.73 (cal/cm³)^{1/2}), di-2-ethylhexyl phthalate (SP value of 9.73 (cal/cm³)^{1/2}), dinonyl phthalate (SP value of 9.30 (cal/cm³)^{1/2}), diisononyl phthalate (DINP, SP value of 9.64 (cal/cm³)^{1/2}), diisodecyl phthalate (SP value of 9.57 (cal/cm³)^{1/2}), ditridecyl phthalate (SP value of 9.48 (cal/cm³)^{1/2}), and dibutylpentyl phthalate (SP value of 9.64 (cal/cm³)^{1/2}). These can be used singly or in combination of two or more.

Examples of the adipic acid ester include diisononyl adipate (DINA, SP value of 9.13 (cal/cm³)^{1/2}), dioctyl adipate (SP value of 9.18 (cal/cm³)^{1/2}), and diisodecyl adipate (SP value of 9.09 (cal/cm³)^{1/2}). These can be used singly or in combination of two or more.

Examples of the benzoic acid ester include glycol ester benzoate (trade name: Benzoflex (registered trademark) grade No. 9-88 SG, manufactured by Eastman Chemical Company, SP value of 10.86 (cal/cm³)^{1/2}), diethylene glycol dibenzoate (SP value of 11.30 (cal/cm³)^{1/2}), and cyclohexane-1,4-diyldimethylene = dibenzoate (SP value of 10.99 (cal/cm³)^{1/2}). These can be used singly or in combination of two or more.

Examples of the hydrogenerated phthalic acid ester include hydrogenerated diisononyl phthalate (DINCH, SP value of 9.22 (cal/cm³)^{1/2}). These can be used singly or in combination of two or more.

These plasticizers can be used singly or in combination of two or more.

The compatibilizing agent is not limited to plasticizers and is, for example, an organic solvent having an SP value in the above-described range.

Examples of the organic solvent include aromatic hydrocarbons such as toluene (SP value of 9.14 (cal/cm³)^{1/2}) and o-xylene (SP value of 9.10 (cal/cm³)^{1/2}); ketones such as acetone (SP value of 9.07 (cal/cm³)^{1/2}), methyl ethyl ketone (SP value of 8.98 (cal/cm³)^{1/2}), and cyclohexanone (SP value of 9.80 (cal/cm³)^{1/2}); esters such as ethyl acetate (SP value of 8.74 (cal/cm³)^{1/2}) and butyl acetate (SP value of 8.70 (cal/cm³)^{1/2}); ethers such as tetrahydrofuran (THF, SP value of 8.28 (cal/cm³)^{1/2}); and polar aprotic solvents such as N,N-dimethylformamide (DMF, SP value of 10.2 (cal/cm³)^{1/2}).

These organic solvents can be used singly or in combination of two or more.

In terms of adhesive strength, as the compatibilizing agent, preferably, a plasticizer is used. More preferably, a carboxylic acid ester plasticizer is used. Even more preferably, a phthalic acid ester, an adipic acid ester, a benzoic acid ester, and a hydrogenerated phthalic acid ester are used. Even more preferably, a benzoic acid ester is used.

In terms of adhesive strength, the compatibilizing agent has an SP value of 7.5 (cal/cm³)^{1/2} or more, preferably 8.0 (cal/cm³)^{1/2} or more, more preferably 8.5 (cal/cm³)^{1/2} or more, even more preferably 9.0 (cal/cm³)^{1/2} or more, even more preferably 9.5 (cal/cm³)^{1/2} or more, particularly preferably 10.0 (cal/cm³)^{1/2} or more, and 13.0 (cal/cm³)^{1/2} or less, preferably 12.5 (cal/cm³)^{1/2} or less, more preferably 12.0 (cal/cm³)^{1/2} or less, even more preferably 11.5 (cal/cm³)^{1/2} or less, particularly preferably 11.0 (cal/cm³)^{1/2} or less.

The content of the compatibilizing agent in the polyisocyanate component is appropriately set depending on the contents of the isocyanate group-terminated urethane prepolymer and the derivative of xylylene diisocyanate, their isocyanate group equivalnets, and their isocyanate group contents.

In terms of adhesive strength, for example, with respect to 100 parts by mass of the content of the derivative of xylylene diisocyanate, the content of the compatibilizing agent is, for example, 10 parts by mass or more, preferably 30 parts by mass or more, more preferably 50 parts by mass or more, even more preferably 70 parts by mass or more, particularly preferably 90 parts by mass or more, and, for example, 500 parts by mass or less, preferably 400 parts by mass or less, more preferably 300 parts by mass or less, even more preferably 200 parts by mass or less, particularly preferably 150 parts by mass or less.

The polyol component contains a macropolyol having a number average molecular weight of 500 or more and 10000 or less and an average number of hydroxyl groups of 1.9 or more and 4.0 or less as an essential component.

Examples of the macropolyol include polyether polyol, polyester polyol, polycarbonate polyol, polyurethane polyol, epoxy polyol, vegetable oil polyol, polyolefin polyol, acrylic polyol, and polymer polyol.

Examples of the polyether polyol include polyoxy (C2-3) alkylene polyol, and polytetramethylene ether polyol.

The polyoxy (C2-3) alkylene polyol is an addition polymerization product of alkylene oxide having 2 to 3 carbon atoms using an initiator of, for example, the above-described low molecular-weight polyol or a known polyamine compound.

Examples of the alkylene oxide include propylene oxide and ethylene oxide. These alkylene oxides can be used singly or in combination of two or more. The polyoxyalkylene polyol include, for example, random and/or block copolymer of propylene oxide and ethylene oxide.

More specific examples of the polyoxy (C2-3) alkylene polyol include polyoxyethylene polyols, polyoxypropylene polyols, and polyoxyethylene· polyoxypropylene (random and/or block) copolymers.

Examples of the polytetramethylene ether polyol include a ring-opening polymerization product produced by cationic polymerization of tetrahydrofuran, and amorphous (non-crystalline) polytetramethylene ether glycol produced by copolymerization of a polymerization unit of tetrahydrofuran with alkyl-substituted tetrahydrofuran or the above-described dihydric alcohol.

Amorphous (non-crystalline) means being in a liquid state at a normal temperature (25°C).

The amorphous polytetramethylene ether glycol can be obtained as, for example, a copolymer of tetrahydrofuranl and alkyl-substituted tetrahydrofuran (for example, 3-methyltetrahydrofuranl) (tetrahydrofuranl/alkyl-substituted tetrahydrofuran (molar ratio) = 15/85 to 85/15, having a number average molecular weight of 500 to 4000, preferably 800 to 2500), or, for example, a copolymer of tetrahydrofuranl and branched glycol (for example, neopentyl glycol) (tetrahydrofuranl/branched glycol (molar ratio) = 15/85 to 85/15, having a number average molecular weight of 500 to 4000, preferably, 800 to 2500).

Examples of the polyester polyol include a polycondensation product, for example, obtained by a reaction of the above-described low molecular-weight polyol and polybasic acid under the known conditions.

Examples of the polybasic acid include oxalic acid, malonic acid, succinic acid, methylsuccinic acid, glutaric acid, adipic acid, 1,1-dimethyl-1,3-dicarboxypropane, 3-methyl-3-ethylglutaric acid, azelaic acid, sebacic acid, and another saturated aliphatic dicarboxylic acid (C11-13); maleic acid, fumaric acid, and itaconic acid, and another unsaturated aliphatic dicarboxylic acid; orthophthalic acid, isophthalic acid, terephthalic acid, toluene dicarboxylic acid, naphthalene dicarboxylic acid, and another aromatic dicarboxylic acid; hexahydrophthalic acid, and another alicyclic dicarboxylic acid; other carboxylic acids such as dimer acid, hydrogenated dimer acid, and het acid, and acid anhydrides derived from these carboxylic acids such as oxalic anhydride, succinic anhydride, maleic anhydride, phthalic anhydride, 2-alkyl (C12 to C18) succinic anhydride, tetrahydrophtalic anhydride, trimellitic anhydride, and acid halides derived from these carboxylic acids such as oxalic acid dichloride, adipic acid dichloride, and sebacic acid dichloride.

Examples of the polyester polyol include plant derived polyester polyols. Specific examples thereof include a vegetable oil polyester polyol obtained by condensation reaction of hydroxycarboxylic acid such as hydroxyl group-containing vegetable oil fatty acid (e.g., castor oil fatty acid containing ricinoleic acid, hydrogenated castor oil fatty acid containing 12-hydroxystearic acid, etc.) using the above-described low-molecular-weight polyol as an initiator under known conditions.

Examples of the polyester polyol include polycaprolactone polyol and polyvalerolactone polyol obtained by ring-opening polymerization of lactones such as ε-caprolactone and γ-valerolactone or lactides such as L-lactide and D-lactide using the above-described low-molecular-weight polyols (preferably, dihydric alcohol) as an initiator, and further include lactone-based polyester polyols obtained by copolymerizing such a polycaprolactone polyol or polyvalerolactone polyol with the above-described dihydric alcohol.

Examples of the polycarbonate polyol include a ring-opening polymerization product of ethylene carbonate using the above-described low molecular-weight polyol (preferably, dihydric alcohol) as an initiator, and amorphous polycarbonate polyol produced by copolymerizing dihydric alcohols such as, for example, 1,4-butanediol, 1,5-pentanediol, 3-methyl-1,5-pentanediol, and 1,6-hexanediol, and a ring-opening polymerization product.

The polyurethane polyol can be obtained as polyester polyurethane polyol, polyether polyurethane polyol, polycarbonate polyurethane polyol, or polyester polyether polyurethane polyol by a reaction of the polyester polyol, polyether polyol and/or polycarbonate polyol produced as described above with polyisocyanate in a range in which the equivalent ratio (OH/NCO) of the hydroxyl group (OH) to the isocyanate group (NCO) is more than 1.

Examples of the epoxy polyol include epoxy polyols obtained by a reaction of the above-described low molecular-weight polyol with multifunctional halohydrins such as epichlorohydrin and β-methylepichlorohydrin.

Examples of the vegetable oil polyol include hydroxyl group-containing vegetable oils such as castor oil and palm oil. For example, a castor oil polyol, or an ester-modified castor oil polyol obtained by a reaction of castor oil fatty acid and polypropylene polyol is used.

Examples of the polyolefin polyol include polybutadiene polyol and partially saponified ethylene-vinyl acetate copolymer.

Examples of the acrylic polyol include copolymers obtained by copolymerization of a hydroxyl group-containing acrylate and a copolymerizable vinyl monomer that can copolymerize with a hydroxyl group-containing acrylate.

Examples of the hydroxyl group-containing acrylate include 2-hydroxyethyl (meth)acrylate, hydroxypropyl (meth)acrylate, hydroxybutyl (meth)acrylate, 2,2-dihydroxymethylbutyl (meth)acrylate, polyhydroxyalkyl maleate, and polyhydroxyalkyl fumarate. Preferably, 2-hydroxyethyl (meth)acrylate is used.

Examples of the copolymerizable vinyl monomer include alkyl(meth)acrylates (having 1 to 12 carbon atoms) such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, isononyl (meth)acrylate, 2-ethylhexyl (meth)acrylate, and cyclohexylacrylate; aromatic vinyls such as styrene, vinyl toluene, and α-methylstyrene; vinyl cyanides such as (meth)acrylonitrile; vinyl monomers containing a carboxyl group such as (meth)acrylic acid, fumaric acid, maleic acid, and itaconic acid, or alkyl ester thereof; alkanepolyol poly(meth)acrylates such as ethyleneglycol di(meth)acrylate, butyleneglycol di(meth)acrylate, hexanediol di(meth)acrylate, oligoethyleneglycol di(meth)acrylate, trimethylol propane di(meth)acrylate, and trimethylol propane tri(meth)acrylate; and vinyl monomers including an isocyanate group such as 3-(2-isocyanate-2-propyl)-α-methylstyrene.

The acrylic polyol can be obtained by copolymerization of these hydroxyl group-containing acrylates and copolymerizable vinyl monomers in the presence of an appropriate solvent and a polymerization initiator.

The acrylic polyol includes, for example, silicone polyol and fluorine polyol.

Examples of the silicone polyol include a modified polysiloxane polyol in which a hydroxyl group is introduced to dialkyl polysiloxane, and an acrylic polyol blended with a silicone compound including a vinyl group such a γ-methacryloxy propyltrimethoxysilane as a copolymerizable vinyl monomer in the copolymerization of the above-described acrylic polyol.

Examples of the fluorine polyol include an acrylic polyol blended with a fluorine compound including a vinyl group such as tetrafluoroethylene or chlorotrifluoroethylene as a copolymerizable vinyl monomer in the copolymerization of the above-described acrylic polyol.

The polymer polyol can be obtained by a dispersion polymerization of a vinyl monomer in the above-described macropolyol (for example, polyether polyol, polyester polyol, polycarbonate polyol, polyurethane polyol, epoxy polyol, vegetable oil polyol, polyolefin polyol, or acrylic polyol).

As the macropolyol in the polymer polyol, preferably, polyether polyol is used. More preferably, polyoxy (C2 to 3) alkylene polyol is used.

More specifically, the polymer polyol is prepared by dispersing, in the macropolyol, polymer fine particles obtained by copolymerizing vinyl monomer by a radical initiator (for example, salt of persulfuric acid, organic peroxide, or an azo-based compound (such as azobisisobutyronitrile)) in the macropolyol.

Examples of the vinyl monomer include styrene, acrylamide, alkyl(meth)acrylate, vinyl cyanide (acrylonitrile), and vinylidene cyanide. These vinyl monomers can be used singly or in combination of two or more. Among them, preferably, styrene, vinyl cyanide (acrylonitrile), styrene, and vinyl cyanide are used in combination.

The content of the polymer of the vinyl monomer with respect to the polymer polyol is, for example, 2% by mass or more, preferably 5% by mass or more, and, for example, 50% by mass or less, preferably 45% by mass or less.

In the polyol component, the macropolyol has a number average molecular weight of (a molecular weight calibrated with standard polystyrene measured with gel permeation chromatograph (GPC)) of 500 or more, preferably 1000 or more, more preferably 1500 or more, and 10000 or less, more preferably 7500 or less, more preferably 5000 or less in terms of adhesive strength.

In the polyol component, the macropolyol has a hydroxyl equivalent of, for example, 150 or more, preferably 200 or more, and, for example, 10000 or less, preferably 8000 or less.

In the polyol component, the macropolyol has an average number of hydroxyl groups of 1.9 or more, preferably 2.0 or more, more preferably 2.3 or more, and 4.0 or less, preferably 3.5 or less, more preferably 3.0 or less in terms of adhesive strength.

As the macropolyol in the polyol component (preferably, the curing agent), preferably, polyether polyol, and vinyl monomer-modified polyol (also referred to as polymer polyol) are used.

In terms of adhesive strength, particularly preferably, the polyol component includes a polyether polyol.

In such a case, the content ratio of polyether polyol with respect to the total amount of the polyol component is, for example, 10% by mass or more, preferably 30% by mass or more, more preferably 50% by mass or more, and usually 100% by mass or less.

As necessary, the polyol component can include the above-described low molecular-weight polyol. These low molecular-weight polyols can be used singly or in combination of two or more.

The content ratio of the low molecular-weight polyol to the polyol component is appropriately selected in a range in which the excellent effects of the present invention are not reduced.

More specifically, the content ratio of the low molecular-weight polyol with respect to 100 parts by mass of the total amount of the polyol component is, for example, 30 parts by mass or less, preferably 20 parts by mass or less, more preferably 10 parts by mass or less, particularly preferably 0 part by mass.

In other words, in terms of adhesive strength, preferably, the polyol component does not include the low molecular-weight polyol, and consists of a macropolyol.

As necessary, the structural polyurethane adhesive can contain known additives other than the compatibilizing agent, and examples thereof include urethane-forming catalysts, anti-aging agents, antioxidants, ultraviolet absorbers, stabilizers such as heat-resistant stabilizers and polymer photostabilizers, organic solvents, pigments, dyes, antifoaming agents, dispersants, leveling agents, thixotropy-enhancing agents, antiblocking agents, mold release agents, lubricants, interlayer adjusters (such as glass beads), fillers, and viscosity modifiers.

The content ratio of the additive is not expecially limited, and appropriately set depending on the purpose and use.

For example, the additive may be contained in the polyisocyanate component (for example, the main agent of the two-component curable adhesive), in the polyol component (for example, the curing agent of the two-component curable adhesive), or in both of the components, and, in addition, may be contained in a mixture (for example, a one-component curable adhesive) of the polyisocyanate component and the polyol component.

On the other hand, in terms of workability, preferably, the structural polyurethane adhesive does not contain an organic solvent. In short, preferably, the structural polyurethane adhesive is a solventless-type adhesive.

In the solventless-type adhesive, for example, the polyisocyanate component is prepared without using an organic solvent. Alternatively, the polyisocyanate component is prepared using an organic solvent and then the solvent is removed by a known method.

In the solventless-type adhesive, for example, the polyol component is prepared without using an organic solvent. Alternatively, the polyol component is prepared using an organic solvent and then the solvent is removed by a known method.

As described above, preferably, the structural polyurethane adhesive is a two-component curable adhesive including a main agent consisting of the polyisocyanate component and a curing agent consisting of the polyol component. The two-component curable adhesive is a resin composition (two-component kit) for forming a cured product by separately preparing the main agent and the curing agent and blending (mixing) them together in use. In other words, the main agent and the curing agent are mixed, thereby obtaining a resin mixture (polyurethane mixture), and the resin mixture is subjected to a curing reaction, thereby obtaining a cured product (polyurethane cured product).

In such a structural polyurethane adhesive, the polyisocyanate component contains a urethane prepolymer having an isocyanate group at its terminal and a derivative of xylylene diisocyanate while the polyol component contains a macropolyol having a number average molecular weight within a predetermined range and an average number of hydroxyl groups within a predetermined range. Thus, excellent adhesive strength can be achieved.

Thus, the above-described structural polyurethane adhesive is suitably used to adhere a plurality of members in a structure formed from the members. Examples of the members of a structure include the members of a building, an automobile, a transportation unit, and a ship.

In the use of the structural polyurethane adhesive, for example, a mixture including the polyisocyanate component and the polyol component is applied and cured on the member, and, as necessary, aged by a known method.

In terms of workability, the mixture containing the polyisocyanate component and the polyol component has a viscosity at 25°C of, for example, 100 mPa· s or more, preferably 300 mPa· s or more, and, for example, 20000 mPa· s or less, preferably 10000 mPa· s or less.

The curing conditions include a curing temperature of, for example, 10°C or more, preferably 20°C or more, and, for example, 80°C or less, preferably 60°C or less, and a curing time of, for example, 0.5 hours or more, preferably 1 hour or more, for example, 10 hours or less, preferably 5 hours or less.

The aging conditions include an aging temperature of, for example, 20°C or more, preferably 25°C or more, and, for example, 80°C or less, preferably 70°C or less, and an aging time of, for example, 1 hour or more, preferably 2 hours or more, and, for example, 72 hours or less, preferably 24 hours or less.

In this manner, the structural polyurethane adhesive is cured and the members are adhered well to each other.

### Example

The present invention is described below with reference to Examples and Comparative Examples. The present invention is not limited to Examples in any way. The "parts" and "%" are based on mass unless otherwise specified. The specific numeral values used in the description below, such as mixing ratios (contents), physical property values, and parameters can be replaced with the corresponding mixing ratios (contents), physical property values, and parameters in the above-described "DESCRIPTION OF THE EMBODIMENTS", including the upper limit values (numeral values defined with "or less", and "less than") or the lower limit values (numeral values defined with "or more", and "more than").

### (Preparation Example 1) Isocyanate Group-terminated Urethane Prepolymer

700 g of a polyether polyol having an average number of hydroxyl groups of 2 (trade name ACTCOL D-2000, having a number average molecular weight of 2000, manufactured by Mitsui Chemicals and SKC Polyurethanes Inc.), 300 g of a polyether polyol having an average number of hydroxyl groups of 3 (trade name ACTCOL T-3000, having a number average molecular weight of 3000, manufactured by Mitsui Chemicals and SKC Polyurethanes Inc.), and 249 g of 4,4'-diphenylmethane diisocyanate (MDI) were mixed. At the time, the equivalent ratio (NCO/OH) was 2.0.

Next, the obtained mixture was stirred at 80°C for 12 hours in nitrogen stream and subjected to a urethane-forming reaction. In this manner, an isocyanate group-terminated urethane prepolymer (MDI prepolymer) with a isocyanate group content of 3.36% by mass was obtained.

The obtained MDI prepolymer had an isocyanate group equivalent of 1250 (measured in conformity to the A method of JIS K 1603-1 (2007) (hereinafter, the same applies)).

### (Preparation Example 2) Isocyanurate Derivative of Xylylene Diisocyanate

By the method described in Example 1 of Japanese Unexamined Patent Publication No. 2019-59821, a composition containing an alcohol-modified isocyanurate derivative of xylylene diisocyanate (hereinafter, referred to as derivative of XDI 1) was obtained.

In other words, in a nitrogen atmosphere, 787.470 parts by mass of 1,3-xylylene diisocyanate (m-XDI (hereinafter, referred to as XDI), an acid degree of 50 ppm) and 0.161 parts by mass of octadecyl 3-(3,5-di-tert-butyl-4-hydroxyphenyl) propionate (hindered phenol antioxidant, trade name: IRGANOX 1076, manufactured by Chiba Japan) were mixed at 60°C to 65°C, and furthre a propylene glycol monomethylether acetate solution of dodecylbenzenesulfonic acid (DDBSA, catalyst deactivator) (active substance concentration of 50% by mass) was added thereto in a ratio in which 0.064 parts by mass of DDBSA was contained.

Next, 15.726 parts by mass of 1,3-butanediol was added to the mixture and subjected to a urethane-forming reaction at 70°C to 75°C.

Next, a propylene glycol monomethylether acetate solution (solid content concentration of 3.7% by mass) of hydroxide of tetrabutylammonium (isocyanurate-forming catalyst, TBAOH (37% methanol solution)) was added to the obtained urethane reaction liquid. The adding amount was adjusted so that 0.803 parts by mass of TBAOH (37% methanol solution) was contained.

Next, while the urethane reaction liquid was mixed, XDI was subjected to an isocyanurate-forming reaction at 70°C to 75°C until the inversion rate reached 30%.

Next, propylene glycol monomethylether acetate solution (active substance concentration 50% by mass) of dodecylbenzenesulfonic acid (DDBSA, catalyst deactivator) was added to the obtained isocyanurate reaction liquid to terminate the isocyanurate-forming reaction. The adding amount was adjusted so that 0.415 parts by mass of DDBSA was contained (the adding ratio of DDBSA to the isocyanurate reaction liquid was 500 ppm).

The obtained isocyanurate reaction liquid was further stirred at 70 to 75°C for 30 miutes. Subsequently, to adjust the acid degree, 20.562 parts by mass of a previously prepared XDI at a high acid degree (an acid degree of 2400 ppm) was added to the isocyanurate reaction liquid, and the mixture was stirred for 30 minutes, and cooled down to 50°C or less. Then, the obtained isocyanurate reaction liquid was subjected to a thin-film distillation (pressure: to 60 PaA, water vapor pressure: 0.7 MPaG, temperature: 170°C, feeding rate: 200 kg/hr), thereby obtaining a composition (derivative of XDI 1) containing an alcohol-modified isocyanurate derivative of xylylene diisocyanate. The derivative of XDI 1 had an isocyanate group equivalent of 239.4.

### (Preparation Example 3) Allophanate Derivative of Xylylene Diisocyanate

A one-liter four-neck flask equipped with a stirrer, a thermometer, a reflux tube, and a nitrogen introducing tube was charged with 100 parts by mass of 1,3-xylylene diisocyanate (m-XDI), 15.8 parts by mass of isobutanol (IBA) (equivalent ratio of NCO/OH = 5), 0.06 parts by mass of tris (2-ethylhexyl)phosphite (antioxidant), and 0.06 parts by mass of pentaerythritoltetrakis [3-(3,5-di-t-butyl-4-hydroxyphenyl)propionate] (antioxidant) in a nitrogen atmosphere. The mixture was subjected to a urethane-forming reaction at 75°C for 3.5 hours. In this manner, a urethane product was obtained.

Next, 0.06 parts by mass of XK-628 (trade name, manufactured by Kusumoto Chemicals, Ltd., bismuth carboxylate, content ratio of bismuth of 31% by mass) as an allophanate catalyst was added to the reaction liquid containing the urethane product. The mixture was subjected to an allophanate-forming reaction at 90°C for 11 hours. When it was confirmed that the transformation of the urethane bond to an allophanate bond was nearly completed (IR ratio of urethane group/allophanate group was 0.1 or less), 0.10 parts by mass of orthotoluenesulfonamide (reaction terminator) was added to terminate the allophanate-forming reaction.

Thereafter, the unreacted isobutanol and 1,3-xylylene diisocyanate were distilled (removed) from the obtained reaction liquid using a thin-film distillation device (vacuum degree: 0.05k Pa, temperature: 150°C), thereby obtaining a composition (hereinafter, referred to as derivative of XDI 2) containing an allophanate derivative of xylylene diisocyanate. The derivative of XDI 2 had an isocyanate group equivalent of 259.

### (Preparation Example 4) Biuret Derivative of Xylylene Diisocyanate

TAKENATE A-14 (trade name, manufactured by Mitsui Chemicals, Inc.) was disolvated using an evaporator, thereby obtaining a composition (hereinafter, referred to as derivative of XDI 3) containing a biuret derivative of xylylene diisocyanate. The derivative of XDI 3 had an isocyanate group equivalent of 202.

### (Preparation Example 5) Polyol Derivative of Xylylene Diisocyanate (alcohol adduct)

TAKENATE D-110N (trade name, manufactured by Mitsui Chemicals, Inc., trimethylol propane adduct of xylylene diisocyanate) was disolvated using an evaporator, thereby obtaining a composition (hereinafter, referred to as derivative of XDI 4) containing a polyol derivative of xylylene diisocyanate (alcohol adduct). The derivative of XDI 4 had an isocyanate group equivalent of 243.

### (Preparation Example 6) Isocyanurate Derivative of Pentamethylene Diisocyanate

A composition (hereinafter, referred to as derivative of PDI) containing an isocyanurate derivative of pentamethylene diisocyanate was obtained in conformity with the description of Example 1 in Japanese Unexamined Patent Publication No.2010-254764. The derivative of PDI had an isocyanate group equivalent of 168.

### Examples 1 to 19 and Comparative Examples 1 and 2

The isocyanate group-terminated urethane prepolymer, the derivative of XDI or the derivative of PDI, and a compatibilizing agent were mixed according to each formulation of Tables 1 to 3. In this manner, a polyisocyanate component (main agent) was obtained.

Further, a macropolyol was mixed according to each formulation of Tables 1 to 3, thereby obtaining a polyol component (curing agent).

In this manner, a structural polyurethane adhesive including a polyisocyanate component and a polyol component was obtained.

### (Evaluation)

### (1) Production of Test Plate

A polypropylene plate (J707G, manufactured by Prime Polymer Co., Ltd.) was subjected to corona treatment and adjusted to have a wettability of 40 dyn/cm or more (JIS K 6768 (1999)). A piece with a width of 25 mm was cut out from the polypropylene plate. The cut piece was prepared as an adherend 1.

Meanwhile, a piece with a width of 25 mm was cut out from a Steel Plate Cold Commercial (SPCC). The cut piece was prepared as an adherend 2.

The polyisocyanate component and the polyol component were mixed in a ratio in which the equivalent ratio (NCO/OH) was 1.0. Next, glass beads (ASGB-60, manufactured by AS ONE Corporation., 0.250 to 0.355 mm) was added to the obtained mixture to adjust the layer thickness. The adding amount of the glass beads was adjusted so as to be 1% by mass with respect to the total amount of the polyisocyanate component, polyol component, and glass beads.

Thereafter, the obtained mixture was applied on the adherend 1. The adherend 1 and adherend 2 were brought into tight contact with each other so as to have an adhesive area of 25 mm × 12.5 mm and an adhesive layer thickness of 0.3 mm, cured at 25°C for 1 hour, and aged at 60°C for 24 hours. In this manner, a test plate was produced.

Further, a carbon fiber reinforced plastic (CFRP (matte), manufactured by Standard Test Piece), which was not corona treated, was used as the adherend 1 in place of the polypropylene, and the polyisocyanate components and polyol components of Examples 1 and 8 and Comparative Examples 1 and 2 were used to produce test plates.

### (2) Measurement of Adhesive Strength

Using a tensile test machine (U-4410, manufactured by ORIENTEC CORPORATION), the shear bond strength between the adherend 1 and adherend 2 was measured at a tensil rate of 50 mm/min to evaluate it in conformity with the following criteria.
Excellent; 340 N/cm² or more
Good; 300 N/cm² or more
Fair; 190 N/cm² or more
Bad; less than 190 N/cm²

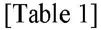

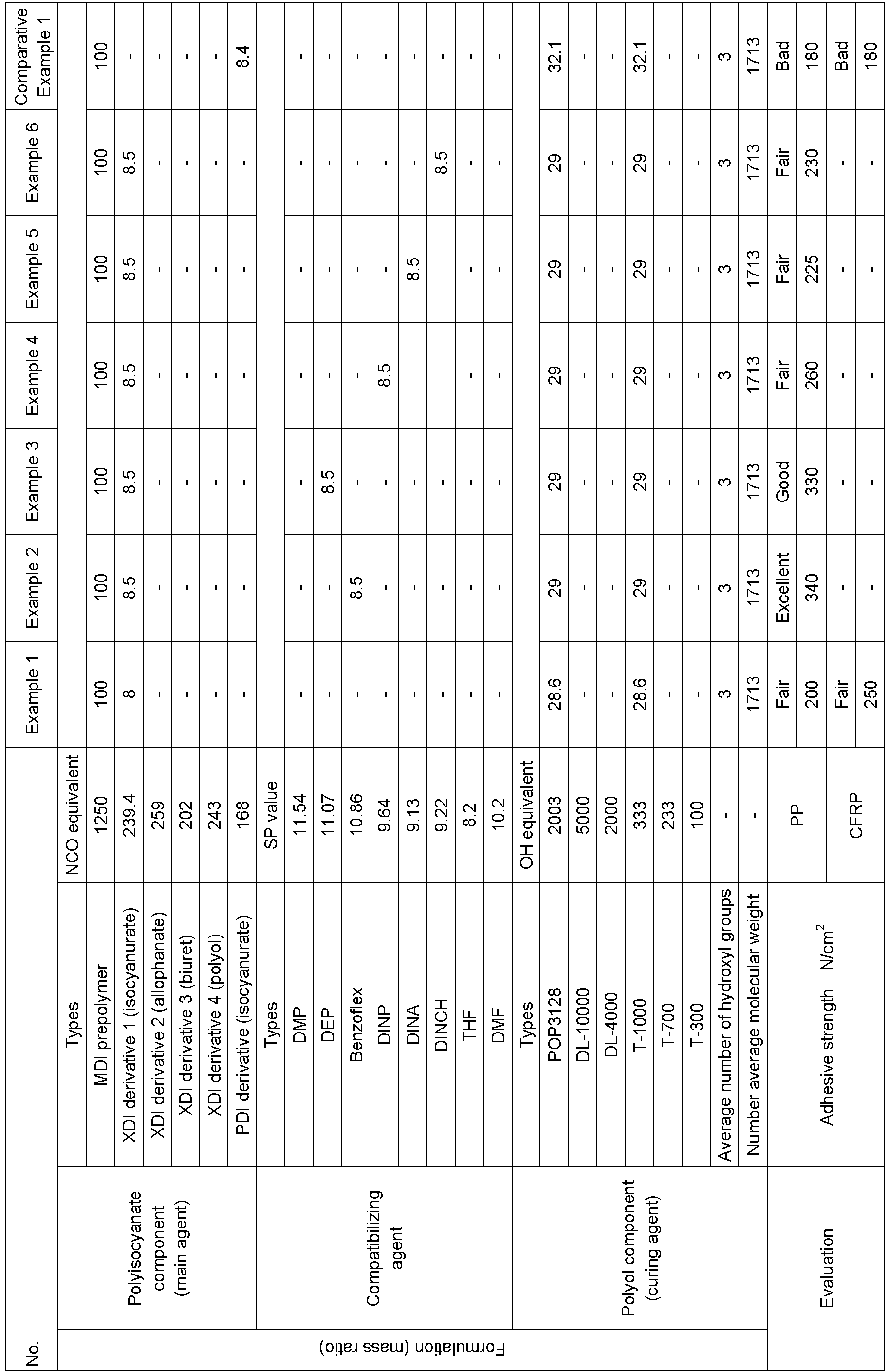

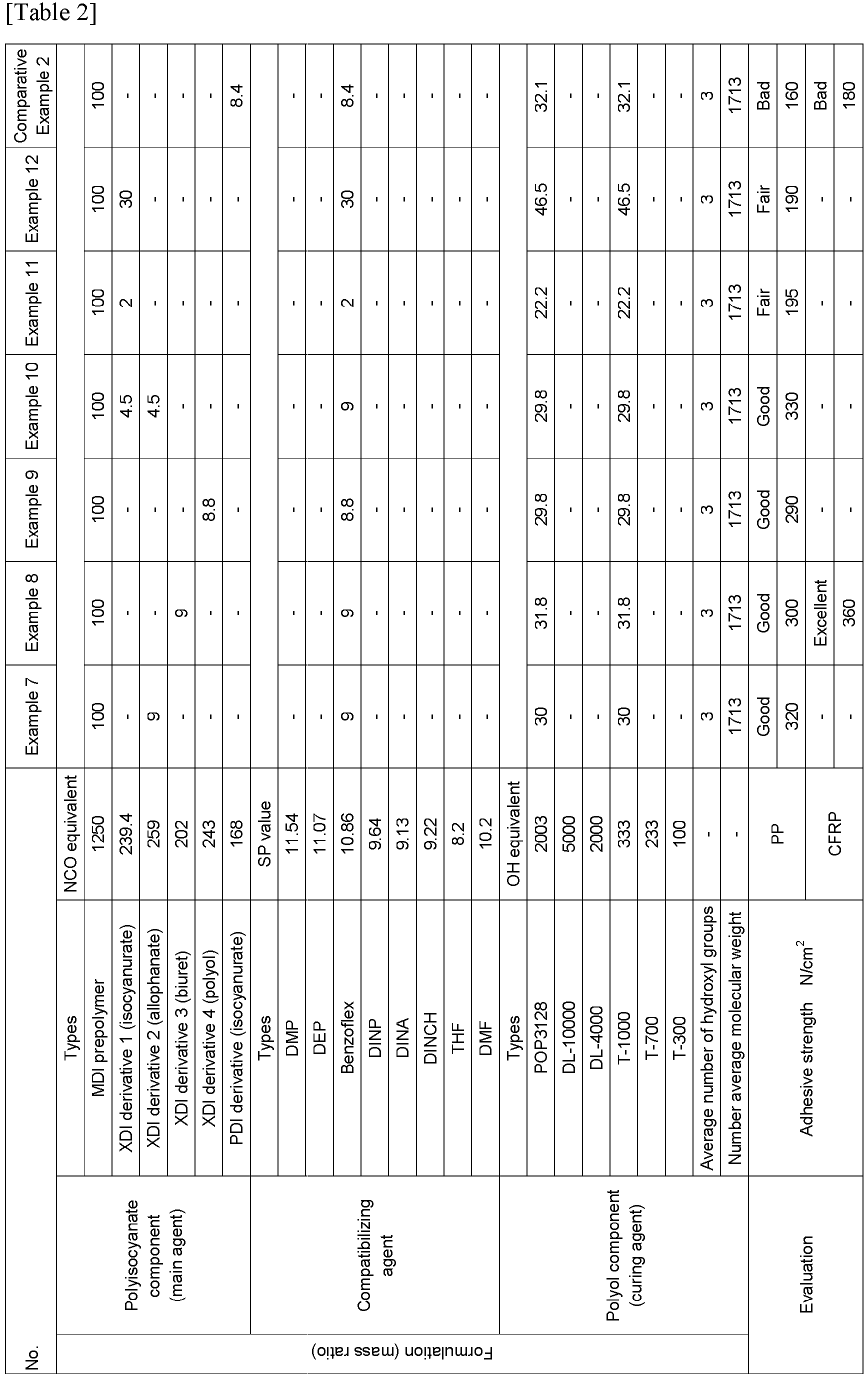

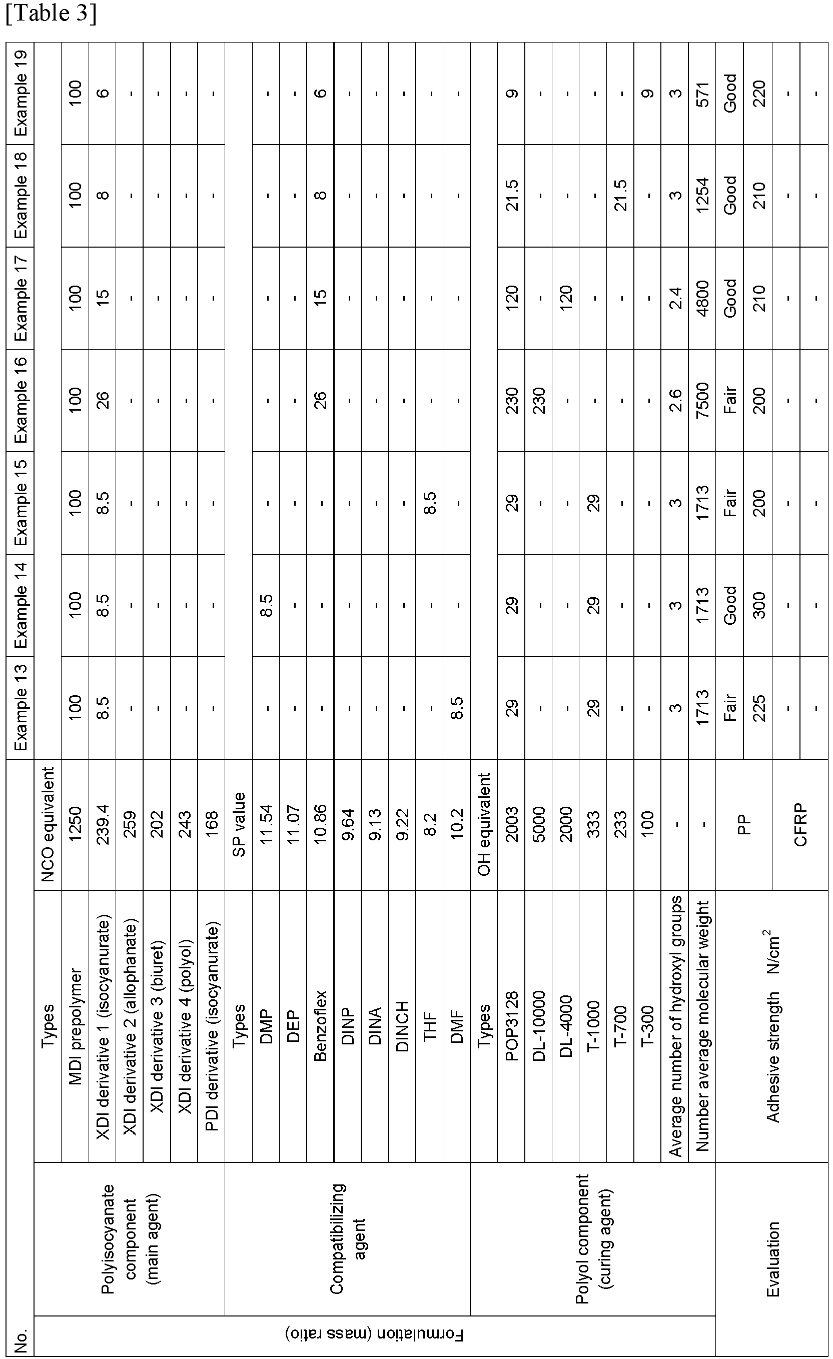

The details of the abbreviations in Tables are described below.
MDI prepolymer: MDI urethane prepolymer obtained in Preparation Example 1
Derivative of XDI 1: Composition containing the isocyanurate derivative of xylylene diisocyanate obtained in Preparation Example 2
Derivative of XDI 2: Composition containing the allophanate derivative of xylylene diisocyanate obtained in Preparation Example 3
Derivative of XDI 3: Composition containing the biuret derivative of xylylene diisocyanate obtained in Preparation Example 4
Derivative of XDI 4: Composition containing the polyol derivative of xylylene diisocyanate obtained in Preparation Example 5
Derivative of PDI: Composition containing the isocyanurate derivative of pentamethylene diisocyanate obtained in Preparation Example 6
DMP: dimethyl phthalate, SP value of 11.54 (cal/cm³)^{1/2}, compatibilizing agent (plasticizer) DEP: diethyl phthalate, SP value of 11.07 (cal/cm³)^{1/2}, compatibilizing agent (plasticizer) Benzoflex: trade name Benzoflex (registered trademark) grade No. 9-88SG, manufactured by Eastman Chemical Company, glycol ester benzoate, SP value of 10.86 (cal/cm³)^{1/2}, compatibilizing agent (plasticizer)
DINP: diisononyl phthalate, SP value of 9.57 (cal/cm³)^{1/2}, compatibilizing agent (plasticizer) DINA: diisononyl adipate, SP value of 9.13 (cal/cm³)^{1/2}, compatibilizing agent (plasticizer) DINCH: hydrogenerated diisononyl phthalate, SP value of 9.22 (cal/cm³)^{1/2}, compatibilizing agent (plasticizer)
THF: tetrahydrofuranl, SP value of 8.28 (cal/cm³)^{1/2}, compatibilizing agent (organic solvent) DMF: N,N-dimethylformamide, SP value of 10.2 (cal/cm³)^{1/2}, compatibilizing agent (organic solvent)
POP 3128: trade name ACTCOL POP-3128, manufactured by Mitsui Chemicals and SKC Polyurethanes Inc., vinyl monomer-modified polyol (also referred to as polymer polyol), hydroxyl equivalent of 2003, average number of hydroxyl groups of 3, number average molecular weight of approximately 6000
DL-10000: trade name ACTCOL DL-10000, manufactured by Mitsui Chemicals and SKC Polyurethanes Inc., polyether polyol, hydroxyl equivalent of 5000, average number of hydroxyl groups of 2, number average molecular weight of 2000
DL-4000: trade name ACTCOL DL-4000, manufactured by Mitsui Chemicals and SKC Polyurethanes Inc., polyether polyol, hydroxyl equivalent of 2000, average number of hydroxyl groups of 2, number average molecular weight of 4000
T-1000: trade name ACTCOL T-1000, manufactured by Mitsui Chemicals and SKC Polyurethanes Inc., polyether polyol, hydroxyl equivalent of 333, average number of hydroxyl groups of 3, number average molecular weight of 1000
T-700: trade name ACTCOL T-700, manufactured by Mitsui Chemicals and SKC Polyurethanes Inc., polyether polyol, hydroxyl equivalent of 233, average number of hydroxyl groups of 3, number average molecular weight of 700
T-300: trade name ACTCOL T-300, manufactured by Mitsui Chemicals and SKC Polyurethanes Inc., polyether polyol, hydroxyl equivalent of 100, average number of hydroxyl groups of 3, number average molecular weight of 300
PP: polypropylene plate, J707G, manufactured by Prime Polymer Co., Ltd.
CFRP: carbon fiber reinforced plastic, CFRP (matte), manufactured by Standard Test Piece

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The structural polyurethane adhesive of the present invention is suitably used, for example, in a building, an automobile, a transportation unit, and a ship to adhere the members.

## Claims

1. A structural polyurethane adhesive comprising:
a polyisocyanate component containing a urethane prepolymer having an isocyanate group at its terminal and a derivative of xylylene diisocyanate; and
a polyol component containing a macropolyol having a number average molecular weight of 500 or more and 10000 or less, and an average number of hydroxyl groups of 1.9 or more and 4.0 or less.

2. The structural polyurethane adhesive according to claim 1, wherein
the polyisocyanate component contains a compatibilizing agent for compatibilize the urethane prepolymer with the derivative of xylylene diisocyanate, and
the compatibilizing agent has a solubility parameter of 7.5 (cal/cm³)^{1/2} or more and 13.0 (cal/cm³)^{1/2} or less calculated by Fedors formula.

3. The structural polyurethane adhesive according to claim 2, wherein
the compatibilizing agent is at least one plasticizer selected from the group consisting of phthalic acid ester, adipic acid ester, benzoic acid ester, and hydrogenated phthalic acid ester.

4. The structural polyurethane adhesive according to claim 1, wherein
the derivative of xylylene diisocyanate includes an isocyanurate derivative of xylylene diisocyanate.

5. The structural polyurethane adhesive according to claim 1, wherein
a content of the derivative of xylylene diisocyanate with respect to 100 parts by mass of a total amount of the urethane prepolymer is 1.5 parts by mass or more and 30 parts by mass or less.

6. The structural polyurethane adhesive according to claim 1, wherein
the macropolyol includes a polyether polyol in the polyol component.

7. The structural polyurethane adhesive according to claim 1, wherein
the urethane prepolymer is a reaction product of a material polyisocyanate containing a diphenylmethane diisocyanate and a material polyol containing a macropolyol.

8. The structural polyurethane adhesive according to claim 1 being a two-component curable adhesive including a main agent consisting of the polyisocyanate component and a curing agent consisting of the polyol component.

9. The structural polyurethane adhesive according to claim 1 being a solventless-type adhesive.
